# EUROPÄISCHE PATENTSCHRIFT

(11) **EP 1 217 133 B1**
(45) Veröffentlichungstag und Bekanntmachung des Hinweises auf die Patenterteilung: **11.01.2006**
(21) Anmeldenummer: 01127785.2
(22) Anmeldetag: 22.11.2001
(51) Int. Cl.: E03C 1/10, E03C 1/084, F16K 24/02

(54) **Belüftungs- und Rückschlagventil**
Venting and one-way valve
Soupape d'aération et d'anti-retour

(30) Priorität: 20.12.2000 IT BS000130
(43) Veröffentlichungstag der Anmeldung: 26.06.2002
(73) Patentinhaber: Antonio Rossi, 25065 Lumezzane (BS) (IT)
(72) Erfinder: Rossi, Antonio Attilio, 25065 Lumezzane (BS) (IT)
(74) Vertreter: Dreiss, Fuhlendorf, Steimle & Becker

(56) Entgegenhaltungen:
- BE-A- 660 587
- CH-A- 202 711
- DE-A- 4 404 385
- DE-U- 9 407 230

## Beschreibung

Die vorliegende Erfindung betrifft einen sog. Rohrbelüfter, der in Verbindung mit sanitären Armaturen verwendet wird. Eine Armatur ist bspw. an eine Trinkwasserinstallation/ -versorgung angeschlossen und gibt durch Betätigung eines Absperrventils der Armatur Trinkwasser ab. An die Armatur ist ein Verbraucher angeschlossen. Der Rohrbelüfter wird zwischen der Armatur und dem Verbraucher installiert, also in Rücksaugrichtung vor dem Absperrventil der Armatur. Aufgabe von Rohrbelüftern ist es, im Falle eines Unterdrucks in der Trinkwasserinstallation/ -versorgung und gleichzeitig geöffnetem Absperrventil der Armatur die Rücksaugen von verunreinigtem Wasser in die Trinkwasserinstallation/ -versorgung zu verhindern. Dies erfolgt bei Rohrbelüftern durch die zwangsweise Ansaugung atmosphärischer Luft und der damit verbundenen Unterbrechung des anstehenden Unterdrucks zwischen Schmutzwasser und Rohrbelüfter.

Genauer gesagt, betrifft die vorliegende Erfindung Belüftungs- und Rückschlagventile, die, wenn sie an einem Wasserhahn angebracht sind, der an eine Wasser verwendende Maschine, wie beispielsweise eine Waschmaschine oder ähnliches, angeschlossen ist, die Aufgabe besitzen, den Abzug der Luft zu ermöglichen und einen Rückfluss des Wassers ins Netz zu verhindern.

Aus der DE 94 07 230 U ist ein Belüftungs- und Rückschlagventil mit sämtlichen Merkmalen des Oberbegriffs der unabhängigen Ansprüche 1 und 2 bekannt.

Darüber hinaus sind bereits verschiedene Realisierungen von Belüftungsventilen bekannt, die im wesentlichen einen Ventilkörper mit verschiedenen Durchgängen und ein schwimmendes Verschlussstück, im allgemeinen als Ventilkegel bezeichnet, das in den Ventilkörper eingesetzt und zwischen einer Verschlussposition und einer Öffnungsposition beweglich ist, umfassen.

Ein innovatives Beispiel eines Belüftungsventils setzt sich zusammen aus einem äußeren Messingkörper und aus einem Einsatz aus Kunststoff, wie beispielsweise einem Acetatharz oder ähnlichem, der in den äußeren Körper eingesetzt ist, um mit diesem Durchgänge für das Wasser und einen Sitz für ein Luftabzugs-Ventilkegel zu bilden.

Ein derartiges Belüftungs- und Rückschlagventil hat im Laufe der Zeit einige Detailänderungen erfahren, um zumindest dessen Aufbau zu vereinfachen und auf eine oder mehrere Dichtungen verzichten zu können. Dennoch unterliegt das Belüftungsventil noch Dichtigkeitsproblemen und anderen Nachteilen, deren Hauptursachen die folgenden sind:
- Vorhandensein von Höckern bzw. Graten auf den Verbindungsebenen des Stempels des Kunststoffeinsatzes;
- Lunkerbildung bzw. Gußlöcher am Boden des Schachts;
- Schrammen auf der Außenfläche des Flansches des Dichtkopfes des Ventilkegels auf Grund von Problemen mit den Bewegungen während der Vormontagevorgänge;
- Montagefehler der torischen Dichtungen, wie beispielsweise Verschlingungen und Montage zweier Dichtungen in demselben Sitz;
- Freilegung und Einschnitte der Dichtungen während der Vormontage des in dem Messingkörper abgedichteten Einsatzes;
- Vorhandensein von Messinggraten bzw. Höckern, die sich von den radialen Schlitzen des Messingkörpers gelöst haben und sich auf die Dichtungen legen und diese einschneiden;
- Mikrogewindeeinbeulungen des Messingkörpers auf Grund der zahlreichen Bewegungen während der Vormontage;
- Montagefehler der Flachdichtung des Ventilkegels;
- Vorhandensein von Graten bzw. Höckern in Höhe der Ebene der Verbindung der Stempel des Kunststoffeinsatzes;
- Oberflächendefekte auf der Silikongummiflachdichtung des Ventilkegels; und
- Bruch des Kopfflansches des Ventilkegels auf Grund von Rückschlägen bzw. Rückstößen.

Die vorliegende Erfindung wurde gemacht, um zumindest die Einflüsse von solchen Problemen zu reduzieren, die noch mit den Belüftungsventilen verknüpft sind, und um den neuesten Vorgaben und Normen auf diesem Gebiet zu entsprechen, die unter anderem wohldefinierte Querschnitte für den Durchgang des Fluids im Inneren des Ventils festlegen.

Es ist außerdem Aufgabe der vorliegenden Erfindung, ein Belüftungs- und Rückschlagventil vorzuschlagen und zu schaffen, das in neuer und origineller Weise aufgebaut ist, damit der äußere Körper und der Einsatz Durchgänge mit einem Querschnitt gemäß den Normen bilden und der Luftabzugs-Ventilkegel in dem Einsatz in anderer Weise geführt wird, um die Realisierung derartiger Durchgänge zu ermöglichen.

Insbesondere ist es Aufgabe der vorliegenden Erfindung, durch eine geeignete Konstruktion eines Belüftungs- und Rückschlagventils sicherzustellen, dass der Ventilkegel des Ventils sicher und zuverlässig sowohl bei hohen als auch bei niedrigen anstehenden Wasserdrücken abdichtet.

Das Belüftungs- und Rückschlagventil gemäß der Erfindung ist gemäß dem Anspruch 1 oder dem nebengeordneten Anspruch 2 ausgebildet und weist darüber hinaus den Vorteil auf, eine Begrenzung der Herstellungskosten zu ermöglichen.

Mehr Details der Erfindung gehen aus der folgenden Beschreibung unter Bezug auf die beigefügten Zeichnungen hervor, die erläuternd und nicht begrenzend zu verstehen sind:
- Fig. 1: zeigt in axialem Teilschnitt ein Belüftungs- und Rückschlagventil in einer ersten Ausführungs- und Montageform;
- Fig. 2: zeigt eine Draufsicht eines Kopfes des Ventils aus Fig. 1;
- Fig. 3: zeigt einen analogen Querschnitt des Belüftungs- und Rückschlagventils in einer zweiten Ausführungs- und Montageform;
- Fig. 4: zeigt eine Draufsicht eines Kopfes des Ventils aus Fig. 2;
- Fig. 5 und 6: zeigen zwei Teilquerschnitte in um 90° axial gedrehten Ebenen lediglich eines äußeren Körpers der Ventile aus Fig. 1 und 3;
- Fig. 7 und 8: zeigen zwei Teilquerschnitte in um 90° axial gedrehten Ebenen lediglich eines Einsatzes des Ventils aus Fig. 1;
- Fig. 9: zeigt eine Ansicht eines Ventilkegels des Ventils aus Fig. 1;
- Fig. 10: und 11 zeigen zwei Teilquerschnitte analog zu jenen der Fig. 7 und 8, jedoch für einen Einsatz des Ventils aus Fig. 3;
- Fig. 12: zeigt eine Ansicht eines Ventilkegels des Ventils aus Fig. 3; und
- Fig. 13: zeigt eine Ansicht eines Ventilkegels in einer konstruktiven Variante.

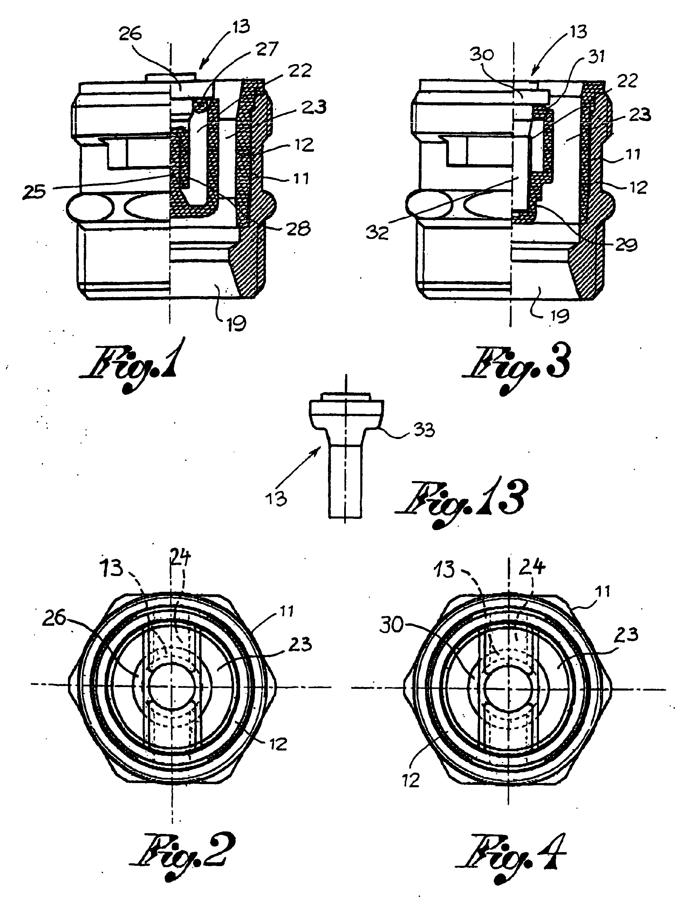

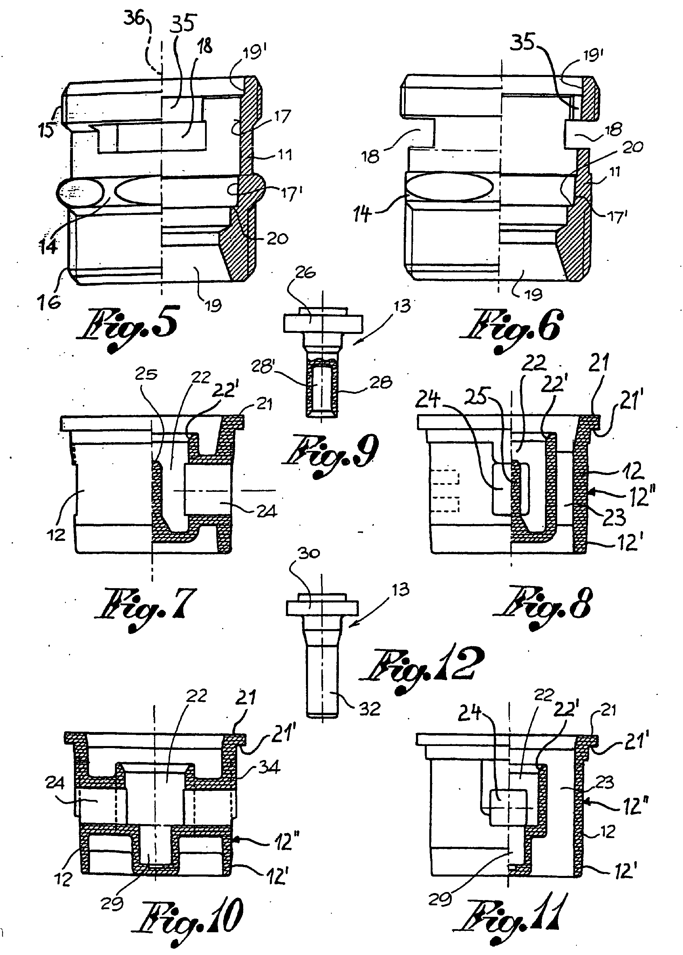

In den beiden Ausführungen der Fig. 1 und 3 umfaßt ein erfindungsgemäßes Belüftungs- und Rückschlagventil im wesentlichen einen metallischen äußeren Körper 11, gewöhnlicherweise aus Messing, einen buchsenförmigen Einsatz 12 aus einem Kunststoffmaterial, wie beispielsweise ein Metallharz, der in den Körper 11 eingesetzt ist, und einen Ventilkegel 13, der in dem Einsatz 12 geführt und axial beweglich ist. Die zwei Ausführungen unterscheiden sich hauptsächlich durch eine unterschiedliche Art der Verbindung zwischen dem Ventilkörper 11 und dem Einsatz 12, wie später beschrieben wird.

Sowohl bei der einen als auch der anderen Ausführungsform weist der Körper 11 außen, auf einer Seite einer sechseckigen Zwischenzone 14 ein Gewinde 15, das in die Öffnung eines - nicht dargestellten - Wasserhahns einschraubbar ist, und auf der entgegengesetzten Seite der Zwischenzone 14 eine mit einem Gewinde versehene Zone 16 auf, an der ein Schlauch- bzw. Gummihalter oder direkt ein Zuleitungsrohr zum Anschluß eines Verbrauchers für das zu verwendende Wasser angeschraubt werden kann. Innen in dem Ventilkörper 11 ist ein Aufnahmesitz 17, auf dessen Höhe radiale Schlitze 18 ausgespart sind, und eine Wasseraustrittsöffnung 19 axial zu dem Aufnahmesitz 17 ausgebildet. Am Eingang des Aufnahmesitzes 17 ist eine Ringstufe 19' vorgesehen, und am Ende des Aufnahmesitzes 17 eine ringförmige Anschlagfläche 20. Zumindest ein Teil 17' der Seitenfläche des Aufnahmesitzes 17 ist in der Nähe des Anschlagfläche 20 konisch ausgebildet. Ein Teil 12' der äußeren Umfangsfläche 12'' des Einsatzes 12 ist konisch ausgebildet und tritt mit der entsprechenden konischen Fläche 17' des Aufnahmesitzes 17 des äußeren Körpers 11 abdichtend in Eingriff.

Der innere Einsatz 12 ist in dem Aufnahmesitz 17 des äußeren Körpers 11 festgelegt, wobei er aufgrund der konischen Fläche 17' eingepreßt ist. Der Einsatz 12 weist an seinem oberen Ende einen radial nach außen auskragenden Flansch 21 mit einer unteren Dichtfläche 21' auf, der in die Stufe des Eingangs des Aufnahmesitzes 17 angepaßt ist. Die Dichtfläche 21' liegt bei in den Körper 11 eingesetztem Einsatz 12 auf dem oberen Rand im Bereich der Stirnfläche des Körpers 11 abdichtend auf. Die Verbindung zwischen dem Körper 11 und dem Einsatz 12 und somit auch zwischen dem Flansch 21 und der Austrittsöffnung 19 des Aufnahmesitzes 17 mittels Preßsitz tragen zur Dichtigkeit zwischen den zwei zusammengebauten Komponenten 11, 12 bei, ohne den Einsatz von Dichtungen.

In seiner Mitte begrenzt der Einsatz 12 einen Schacht 22, der nach unten zu seinem Boden hin geschlossen und zum Eingang des Aufnahmesitzes 17 hin offen ist. Der Schacht 22 steht mit in dem Einsatz 12 ausgebildeten longitudinalen Durchgängen 23 in Verbindung, die parallel zur Längsachseachse des Körpers 11 verlaufen. Diese Durchgänge 23 sind dazu bestimmt, die Austrittsöffnung des Wasserhahns mit der Öffnung 19 für den Austritt des Wassers zu dessen Verwendung in dem Verbraucher zu verbinden.

Des weiteren weist der Einsatz 12 in Höhe der radialen Schlitze 18 des Körpers 11 Radialöffnungen 24 auf, durch die der mittige Schacht 22 über die radialen Schlitze 18 mit dem Äußeren des Ventilkörpers 11 verbunden ist.

In der Ausführungsform aus Fig. 1 weist der Einsatz 12, der den Fig. 7 und 8 entspricht, einen Führungsschaft 25 auf, der sich vom Boden des mittigen Schachts 22 aus nach oben erstreckt. Der Ventilkegel 13 weist einen Kopf 26 mit einer Dichtung 27 und eine Stange 28 mit einer axialen Führungsöffnung 28' gemäß der Darstellung in Fig. 9 auf. Mittels dieser Öffnung 28' ist der Ventilkegel 13 mit dem Führungsschaft 25 verbunden und kann in axialer Richtung längs des Führungsschaftes 25 gleiten. Der Ventilkegel 13 kann so ausgehend von einer abgesenkten Verschlußposition, in der der Kopf 26 des Ventilkegels 13 mit der jeweiligen Dichtung 27 auf den vorzugsweise angesenkten Rand 22' des Schachts 22 ruht.

Bei der Ausführung aus Fig. 3 weist der Einsatz 12, der den Fig. 10 und 11 entspricht, statt des Führungsschaftes 25 eine Vertiefung 29 am Boden des mittigen Schachts 22 auf. Der Ventilkegel 13 weist ebenfalls einen Kopf 30 mit einer Dichtung 31 auf, umfaßt jedoch eine Stange 32 (vlg. Fig. 12), die in der Vertiefung 29 aufgenommen wird und in ihr entlang der Längsachse des Körpers 11 gleiten kann. Dadurch wird eine axiale Bewegung des Ventilkegels 13 ermöglicht, ausgehend von der abgesenkten Verschlußposition, in welcher der Kopf 30 mit der Dichtung 31 auf dem vorzugsweise angesenkten Rand 22' des Schachts 22 ruht.

Es ist festzuhalten, dass der Ventilkegel 13 bei der einen oder anderen Ausführung auch ohne Dichtung 27, 31 vorgesehen sein könnte, wobei es einstückig mit einem Kopfteil 33 ausgebildet sein kann, der dazu bestimmt ist, abdichtend auf dem Rand 22' des Schachtes 22 des Einsatzes 12 aufzuliegen (vgl. Fig. 13).

In jedem Fall ist der Ventilkegel 13 so dimensioniert bzw. die Stange 28 oder 32 des Ventilkegels 13 so lang ausgebildet, dass sich die Stange 28 oder 32 bei einem anliegenden Wasserdruck, der einen vorgebbaren Grenzwert übersteigt, auf dem Boden des Schachts 22 abstützt. Die aufgrund des anliegenden Drucks auf den Ventilkegel 13 in der Verschlußposition wirkenden Kräfte werden über die Stange 28 oder 32 in den Boden des Schachts 22 geleitet. Dadurch belasten sie nicht den Dichtsitz zwischen dem Kopf 26 oder 30 bzw. dem Kopfteil 33 einerseits und dem Rand 22' des Schachts 22 andererseits. Ein Festkleben des Kopfes 26 oder 30 bzw. des Kopfteils 33 des Ventilkegels 13 auf dem Rand 22' des Schachts 22 in der Verschlußposition wird also vermieden. Außerdem werden eventuelle Rückschläge auf den Kopf 26 oder 30 bzw. den Kopfteil 33 über die Stange 28 oder 32 des Ventilkegels 13 auf den Einsatz 12 übertragen.

Normalerweise befindet sich der Ventilkegel 13 in der Verschlußposition (in den Figuren unten) und liegt mit der jeweiligen Dichtung 27 oder 31 bzw. mit dem Kopfteil 33 abdichtend auf dem Rand 22' des Schachts 22 auf. Im Falle eines Rückflusses (aufgrund eines Druckabfalls in der Trinkwasserinstallation/ -versorgung) wird der Ventilkegel 13 nach oben verschoben, um den Durchtritt von Wasser aus dem Wasserhahn in die Trinkwasserinstallation/ -versorgung zu verhindern.

Wenn der Wasserhahn offen ist, verschiebt der Druck des gelieferten Wassers den Ventilkegel 13 und hält ihn in der Verschlußposition in Auflage auf und in Abdichtung mit dem Rand 22' des Schachts 22, wodurch der Schacht 22 verschlossen wird. Dann fließt das Wasser regelmäßig durch die longitudinalen Durchgänge 23 zum Verbraucher.

Wenn im Gegensatz dazu aus irgendeinem Grund oder Anlaß der Druck des Wassers in Strömungsrichtung nach dem Ventil höher wird als vor dem Ventil, wodurch das Wasser veranlasst wird, von dem Verbraucher zurück zum Wasserhahn zu fließen, verschiebt sich der Ventilkegel 13 (in den Figuren nach oben) in die Öffnungsposition. Dann verhindert der Ventilkegel 13 den Rückfluß des Wassers zum Wasserhahn und damit zum Versorgungsnetz und öffnet den Schacht 22, wodurch es dem zurückkehrenden Wasser ermöglicht wird, durch die Radialöffnungen 24 und die seitlichen Schlitze 18 zu laufen und sich aus dem Ventil heraus zu entladen.

Die nachfolgenden Leitlinien haben zur Erfindung geführt und können wie folgt zusammengefaßt werden:
- Eliminierung der torischen Dichtungen, die bei der Realisierung der Abdichtung zwischen Oberflächen des Einsatzes aus Kunststoff, dem Körper des Wasserhahns und dem Körper des Ventilkegels gewöhnlich verwendet wurden, ohne Einsatz anderer Dichtelemente;
- Reduzierung des Außendurchmessers des Körpers des Ventils;
- Ersatz der flachen Silikongummidichtungen durch torische Dichtungen aus dem gleichen Material;
- Mitberücksichtigung des Kunststoffeinsatzes bei der Widerstandsfähigkeit gegen Rückschläge.

Durch die Eliminierung der torischen Dichtungen 27, 31 durch den Preßsitz zwischen dem Körper 11 und dem Einsatz 12 können gleichzeitig viele der oben beschriebenen Probleme gelöst und kann zugleich eine beträchtliche Reduzierung der Kosten zu realisiert werden.

In der Tat wird es durch die Eliminierung derartiger Dichtungen 27, 31 ermöglicht, einen Einsatz 12 zu realisieren, der frei von Hinterschneidungen und somit aus einem Formwerkzeug mit Gesamtabdruck axial entnehmbar ist. Bei der Herstellung des Einsatzes 12 befinden sich Verschlußflächen bzw. -ebenen des Formwerkzeugs (von denen unweigerlich die Bildung auch leichtester Höcker bzw. Grate stammt) in Positionen, die keinen Einfluss auf die Dichtigkeit des Belüftungs- und Rückschlagventils haben.

Außerdem wird es durch die Eliminierung der Dichtungen 27, 31 möglich, die Phase der Vormontage zu vermeiden, der im allgemeinen einige Defekte zugeschrieben werden müssen.

Dank dieser Modifikation kann eine Reduzierung des Außendurchmessers des Ventilkörpers 11 realisiert werden.

Das Ersetzen der flachen Silikongummidichtungen durch torische Dichtungen 27, 31 oder durch mit dem Kopf 26, 30 des Ventilkegels 13 einstückige Dichtungen (Kopfteil 33) ist vorwiegend durch die Notwendigkeit bedingt, die Spezifikationen der Norm bezüglich der Innenteile des Belüftungs- und Rückschlagventils zu erfüllen.

An diesem Punkt sei ein typisches Erfordernis aller Belüftungsventile vom Typ C betrachtet, zu denen das Ventil dieser Erfindung gehört. Damit die Dichtigkeit bei einem Minimaldruck von 500 mm Wassersäule gewährleistet ist, ist es über die völlige Abwesenheit von Oberflächendefekten sowohl bei den Dichtungen als auch bei den anderen normgemäßen, die Dichtigkeit betreffenden Komponenten hinaus unerläßlich, dass eine gute Zentrierung zwischen den Dichtelementen und den entsprechenden Sitzen gewährleistet ist. Das kann mit der vorliegenden Erfindung erzielt werden.

In der Tat kann die Führung des Ventilkegels 13 erzielt werden, indem die lichte Weite zwischen dem Innendurchmesser des Schachts 22 und den kreisförmigen Sektoren, die Teil des Ventilkegels 13 sind und entweder in Form von Rippen oder unter Reduzierung des Außendurchmessers des Führungsteils mit Ebenen gebildet sind, innerhalb bestimmter Werte gehalten wird.

Die Lösung, die umgesetzt wurde, besteht darin, den Ventilkegel 13 in mindestens zwei verschiedenen Führungsebenen in dem Schacht zu führen. Die Führungsebenen sind entlang der Längsachse des Körpers 11 axial zueinander beabstandet. Die Führungsebenen erstrecken sich vorzugsweise senkrecht zu der Längsachse. In den Führungsebenen sind Berührungsflächen zwischen dem Schacht 22 des Einsatzes 12 und der Stange 28, 32 des Ventilkegels 13 ausgebildet. Die Berührungsflächen sind vorzugsweise punktförmig. Durch die erfindungsgemäße Führung des Ventilkegels 13 wird ein Verkanten des Ventilkegels 13 in dem Schacht 22 verhindert. Dadurch liegt der Kopf 26, 30 bzw. das Kopfteil 33 des Ventilkegels 13 stets vollflächig auf dem Dichtsitz am Rand 22' des Schachts 22 auf. Es kann eine sichere und zuverlässige Abdichtung des Ventilkegels 13 gegenüber dem Schacht 22 sowohl bei hohen als auch bei niedrigen anstehenden Wasserdrücken sichergestellt werden.

Die eine (in den Figuren obere) Führungsebene wird von Kontaktpunkten zwischen der Dichtung 27, 31 des Kopfes 26, 30 des Ventilkegels 13 und einem konisch abgeschrägten Sitz an dem Rand 22' des Schachts 22 zur Realisierung einer Selbstführung gebildet. Die zweite (in den Figuren untere) Führungsebene wird von einer Führung gebildet, die an dem dem Kopf 26, 30 gegenüberliegenden Ende der Stange 28, 32 ausgebildet ist. Der Bereich zwischen den zwei Führungsebenen des Ventilkegels 13 wird dadurch vollständig frei von Führungen, wodurch das Einhalten der minimalen lichten Weite des Luftdurchlasses garantiert wird.

Die beschriebene Reduzierung des Außendurchmessers des Ventils und die Eliminierung von Hinterschneidungen, die zuvor für die Montage von zwei Dichtungen für den Einsatz 12 in dem Messingkörper 11 erforderlich waren, haben die Dimension des Ringquerschnitts zwischen dem äußeren Teil des Einsatzes 12 und dem inneren Teil des Körpers 11 des Belüftungs- und Rückschlagventils reduziert.

Wenn die zwei Radialöffnungen 24 mit rechteckigem Querschnitt, die den Schacht 22 mit dem äußeren Körper 11 verbinden, bezüglich der radialen Schlitze 18 des Körpers 11 ausgerichtet sind, werden die Vorschriften der Normen und Gesetze eingehalten.

Es wurde nun ein Einsatz 12 und ein Körper 11 mit mindestens einer Führungsnut 35 und mindestens einer in die Führungsnut 35 eingreifenden Einstellkerbe 34 realisiert, welche eine derartige Montage der zwei Komponenten 11, 12 ermöglichen, dass die genannten Öffnungen 24 und die Schlitze 18 nach der Montage immer fluchtend zueinander ausgerichtet sind. Der Einsatz 12 wird vor der Montage in eine gewünschte Drehposition um die Längsachse des Ventils relativ zu dem Körper 11 gebracht und derart in den Aufnahmesitz 17 des Körpers 11 eingesetzt, dass die Einstellkerbe 34 mit der Führungsnut 35 in Eingriff tritt.

Sämtliche Querschnitte des Wasserdurchgangs wurden vergrößert, wodurch eine beträchtliche Erhöhung des Durchflusses erzielt werden konnte. Um zu verhindern, dass in Folge übermäßiger Drücke ein Strecken der Dichtung 27, 31 bei Montage an dem Ventilkegel 13 erfolgt, wird die Länge der Stange 28, 32 des Ventilkegels 13 und die Tiefe des Schachts 22 so realisiert, dass sich das dem Kopf 26, 30 bzw. dem Kopfteil 33 gegenüberliegende Ende der Stange 28, 32 auf dem Boden des Schachts 22 abstützt. Dadurch wird das Quetschen dieser Dichtung 27, 31 begrenzt, und die Wirkung der übermäßigen Drücke oder von Rückschlägen wird nicht vollständig auf den Kopf 26, 30 bzw. den Kopfteil 33 des Ventilkegels 13 durchschlagen. Nach einer bestimmten Kompression der Dichtung 27, 31 kommt dann nämlich das untere Ende der Stange 28, 32 des Ventilkegels 13 in Auflage mit dem Boden des Schachts 22.

## Patentansprüche

1. Belüftungs- und Rückschlagventil für eine Armatur, mit einem metallischen äußeren Körper (11), der in eine Öffnung der Armatur einschraubbar ist, mit einem Einsatz (12) aus Kunststoff, der in den Körper (11) eingesetzt ist, und mit einem Ventilkegel (13), welcher dem Einsatz (12) zugeordnet ist, und bei dem:
- der Körper (11) einen axialen Aufnahmesitz (17) in Linie mit einer Öffnung (19) für den Austritt von Wasser zu einem Verbraucher sowie radiale Schlitze (18) in Höhe des Aufnahmesitzes (17) aufweist;
- der Einsatz (12) in den axialen Aufnahmesitz (17) des Körpers (11) eingepasst ist und einen Schacht (22), longitudinale Durchgänge (23) für den Transport des Wassers zur Austrittsöffnung (19) des Körpers (11) und Radialöffnungen (24) aufweist, die von dem Schacht (22) bis zu den radialen Schlitzen (18) zum Ablassen des Wassers und/oder von Rückflussluft aus dem Ventil reichen;
- der Ventilkegel (13) dem Schacht (22) zugeordnet ist und zwischen einer Verschlussposition, in welcher eine Verbindung zwischen den in den Schacht (22) mündenden Radialöffnungen (24) und den longitudinalen Durchgängen (23) des Einsatzes (12) unterbrochen ist, und einer Öffnungsposition bei Vorhandensein eines Wasserrückflusses bewegbar ist, in welcher die longitudinalen Durchgänge (23) mit den Radialöffnungen (24) in Verbindung stehen; und
- der Ventilkegel (13) eine Stange (28; 32) und einen Kopf (26; 30) aufweist und die Stange (28; 32) in dem Schacht (22) geführt ist, wobei der Kopf (26; 30) des Ventilkegels (13) in der Verschlussposition auf einem dem Kopf (26; 30) zugewandten Rand (22') des Schachts (22) dichtend aufliegt,
**dadurch gekennzeichnet, dass** sich vom Boden des Schachts (22) ein Führungsschaft (25) erhebt und die Stange (28) des Ventilkegels (13) eine axiale Führungsöffnung (28') aufweist, die den Führungsschaft (25) für eine axiale Führung des Ventilkegels (13) und für eine Positionierung des Kopfes (26) auf dem Rand (22') des Schachts (22) aufnimmt, wobei die Stange (28, 32) des Ventilkegels (13) so lang ausgebildet ist, dass sie auf dem Boden des Schachts (22) aufliegt, wenn sich der Ventilkegel (13) in der Verschlussposition befindet und einem Druck ausgesetzt ist, der größer als ein vorgebbarer Grenzwert ist.

2. Belüftungs- und Rückschlagventil für eine Armatur, mit einem metallischen äußeren Körper (11), der in eine Öffnung der Armatur einschraubbar ist, mit einem Einsatz (12) aus Kunststoff, der in den Körper (11) eingesetzt ist, und mit einem Ventilkegel (13), welcher dem Einsatz (12) zugeordnet ist, und bei dem:
- der Körper (11) einen axialen Aufnahmesitz (17) in Linie mit einer Öffnung (19) für den Austritt von Wasser zu einem Verbraucher sowie radiale Schlitze (18) in Höhe des Aufnahmesitzes (17) aufweist;
- der Einsatz (12) in den axialen Aufnahmesitz (17) des Körpers (11) eingepasst ist und einen Schacht (22), longitudinale Durchgänge (23) für den Transport des Wassers zur Austrittsöffnung (19) des Körpers (11) und Radialöffnungen (24) aufweist, die von dem Schacht (22) bis zu den radialen Schlitzen (18) zum Ablassen des Wassers und/oder von Rückflussluft aus dem Ventil reichen;
- der Ventilkegel (13) dem Schacht (22) zugeordnet ist und zwischen einer Verschlussposition, in welcher eine Verbindung zwischen den in den Schacht (22) mündenden Radialöffnungen (24) und den longitudinalen Durchgängen (23) des Einsatzes (12) unterbrochen ist, und einer Öffnungsposition bei Vorhandensein eines Wasserrückflusses bewegbar ist, in welcher die longitudinalen Durchgänge (23) mit den Radialöffnungen (24) in Verbindung stehen; und
- der Ventilkegel (13) eine Stange (28; 32) und einen Kopf (26; 30) aufweist und die Stange (28; 32) in dem Schacht (22) geführt ist, wobei der Kopf (26; 30) des Ventilkegels (13) in der Verschlussposition auf einem dem Kopf (26; 30) zugewandten Rand (22') des Schachts (22) dichtend aufliegt,
**dadurch gekennzeichnet, dass** am Boden des Schachts (22) eine Vertiefung (29) vorgesehen ist, welche die Stange (32) des Ventilkegels (13) für eine axiale Führung des Ventilkegels (13) und für eine Positionierung des Kopfes (26) auf dem Rand (22') des Schachts (22) aufnimmt, wobei die Stange (28, 32) des Ventilkegels (13) so lang ausgebildet ist, dass sie auf der Vertiefung (29) des Bodens aufliegt, wenn sich der Ventilkegel (13) in der Verschlussposition befindet und einem Druck ausgesetzt ist, der größer als ein vorgebbarer Grenzwert ist.

3. Belüftungs- und Rückschlagventil nach Anspruch 1 oder 2, **dadurch gekennzeichnet, dass** der Kopf (26; 30) des Ventilkegels (13) mit einer torischen Dichtung (27, 31) zur Auflage und Abdichtung auf einem angesenkten Rand (22') des Schachts (22), wenn er sich in der Verschlussposition befindet, versehen ist.

4. Belüftungs- und Rückschlagventil nach nach Anspruch 1 oder 2, **dadurch gekennzeichnet, dass** der Kopf (26; 30) des Ventilkegels (13) einen einstückigen Abschnitt (33) zur Auflage und Abdichtung auf einem angesenkten Rand (22') des Schachts (22), wenn er sich in der Verschlussposition befindet, aufweist.

5. Belüftungs- und Rückschlagventil nach einem der vorhergehenden Ansprüche, **dadurch gekennzeichnet, dass** der Einsatz (12) und der äußere Körper (11) zwangsweise und ohne dazwischenliegende Dichtung miteinander verbunden sind, wobei zumindest ein Teil (12') der äußeren Umfangsfläche (12") des Einsatzes (12) konisch ausgebildet ist, der konische Teil (12') mit einer entsprechenden konischen Fläche (17') des Aufnahmesitzes (17) des äußeren Körpers (11) in Eingriff tritt, und der Einsatz (12) einen Flansch (21) aufweist, der abdichtend mit einem Rand im Bereich des Eingangs des Aufnahmesitzes (17) des Körpers (11) verbunden ist.

## Claims

1. A venting and one-way valve for fittings, having a metallic outer body (11) which can be screwed into an opening of the fittings, having an insert (12) made of plastic, which has been inserted into the body (11), and having a valve cone (13) assigned to the insert (12), and wherein:
- the body (11) has an axial receiving seat (17) aligned with an opening (19) for the outflow of water to a consumer, as well as radial slits (18) at the level of the receiving seat (17);
- the insert (12) has been fitted into the axial receiving seat (17) of the body (11) and has a shaft (22), longitudinal passages (23) for the transport of the water to the outlet opening (19) of the body (11) and radial openings (24), which extend from the shaft (22) as far a the radial slits (18) for removing the water and/or return air from the valve;
- the valve cone (13) is assigned to the shaft (22) and can be moved from a closed position, in which a connection between the radial openings (24) terminating in the shaft (22) and the longitudinal openings (23) of the insert (12) is interrupted, and an open position in case of the presence of a water return flow, in which the longitudinal passages (23) are in connection with the radial openings (24); and
- the valve cone (13) has a rod (28, 32) and a head (26, 30), and the rod (28, 32) is conducted in the shaft (22), wherein in the closed position the head (26, 30) of the valve cone (13) sealingly rests on a rim (22') of the shaft (22) facing the head (26, 30),
**characterized in that** a guide shaft (25) rises from the bottom of the shaft (22), and the rod (28) of the valve cone (13) has an axial guide opening (28') which receives the guide shaft (25) for axial guidance of the valve cone (13) and for positioning of the head (26) on the rim (22') of the shaft (22), wherein the rod (28, 32) of the valve cone (13) is embodied sufficiently long so that it rests on the bottom of the shaft (22) when the valve cone (13) is in the closed position and is subjected to a pressure which is greater than a preselectable threshold value.

2. A venting and one-way valve for fittings, having a metallic exterior body (11) which can be screwed into an opening of the fittings, having an insert (12) made of plastic, which has been inserted into the body (11), and having a valve cone (13) assigned to the insert (12), and wherein:
- the body (11) has an axial receiving seat (17) aligned with an opening (19) for the outflow of water to a consumer, as well as radial slits (18) at the level of the receiving seat (17);
- the insert (12) has been fitted into the axial receiving seat (17) of the body (11) and has a shaft (22), longitudinal passages (23) for the transport of the water to the outlet opening (19) of the body (11) and radial openings (24), which extend from the shaft (22) as far a the radial slits (18) for removing the water and/or return air from the valve;
- the valve cone (13) is assigned to the shaft (22) and can be moved from a closed position, in which a connection between the radial openings (24) terminating in the shaft (22) and the longitudinal openings (23) of the insert (12) is interrupted, and an open position in case of the presence of a water return flow, in which the longitudinal passages (23) are in connection with the radial openings (24); and
- the valve cone (13) has a rod (28, 32) and a head (26, 30), and the rod (28, 32) is conducted in the shaft (22), wherein in the closed position the head (26, 30) of the valve cone (13) sealingly rests on a rim (22') of the shaft (22) facing the head (26, 30),
**characterized in that** a depression (29) is provided in the bottom of the shaft (29), which receives the rod (32) of the valve cone (13) for axial guidance of the valve cone (13) and for positioning of the head (26) on the rim (22') of the shaft (22), wherein the rod (28, 32) of the valve cone (13) is embodied sufficiently long that it rests on the depression (29) in the bottom when the valve cone (13) is in the closed position and is subjected to a pressure which is greater than a preselectable threshold value.

3. The venting and one-way valve in accordance with claim 1 or 2, **characterized in that** the head (26, 30) of the valve cone (13) is provided with a toric seal (27, 31) for placement on and sealing of a countersunk rim (22') of the shaft (22) when it is in the closed position.

4. The venting and one-way valve in accordance with claim 1 or 2, **characterized in that** the head (26, 30) of the valve cone (13) has a one-piece section (33) for placement in and sealing of a countersunk rim (22') of the shaft (22) when it is in the closed position.

5. The venting and one-way valve in accordance with one of the preceding claims, **characterized in that** the insert (12) and the exterior body (11) are positively connected with each other without an interposed seal, wherein at least a portion (12') of the exterior circumferential face (12") of the insert (12) is conically embodied, the conical portion (12') enters into engagement with a corresponding conical face (17') of the receiving seat (17) of the exterior body (11), and the insert (12) has a flange (21), which is sealingly connected with a rim in the area of the inlet of the receiving seat (17) of the body (11).

## Revendications

1. Soupape d'aération et d'anti-retour pour un robinet, comportant un corps (11) extérieur métallique, apte à être vissé dans un orifice du robinet, un insert (12) en matière plastique, monté dans le corps (11), et un siège de soupape (13) qui est associé à l'insert (12), et dans laquelle :
- le corps (11) comporte un logement de réception (17) axial, aligné avec un orifice (19) pour la sortie de l'eau vers un consommateur, ainsi que des fentes (18) radiales à la hauteur du logement de réception (17);
- l'insert (12) est inséré dans le logement de réception (17) axial du corps (11) et comporte une cavité (22), des passages longitudinaux (23) pour le transport de l'eau vers l'orifice de sortie (19) du corps (11) et des orifices radiaux (24), qui s'étendent depuis la cavité (22) jusqu'aux fentes (18) radiales pour l'évacuation de l'eau et/ou de l'air de reflux hors de la soupape;
- le siège de soupape (13) est associé à la cavité (22) et est mobile, en présence d'un reflux d'eau, entre une position d'obturation, qui interrompt la liaison entre les orifices radiaux (24) débouchant dans la cavité (22) et les passages longitudinaux (23) de l'insert (12), et une position d'ouverture, dans laquelle les passages longitudinaux (23) communiquent avec les orifices radiaux (24); et
- le siège de soupape (13) comporte une tige (28 ; 32) et une tête (26; 30) et la tige (28; 32) est guidée dans la cavité (22), sachant que, dans la position d'obturation, la tête (26; 30) du siège de soupape (13) est en appui étanche sur un bord (22)' de la cavité (22), orienté vers la tête (26; 30),
**caractérisée en ce qu'**une tige de guidage (25) s'élève à partir du fond de la cavité (22) et la tige (28) du siège de soupape (13) comporte un orifice de guidage (28') axial, dans lequel la tige de guidage (25) est reçue pour un guidage axial du siège de soupape (13) et pour un positionnement de la tête (26) sur le bord (22') de la cavité (22), la tige (28; 32) du siège de soupape (13) étant réalisée avec une longueur telle qu'elle vient en appui sur le fond de la cavité (22) lorsque le siège de soupape (13) est dans la position d'obturation et est sollicité par une pression qui est supérieure à une valeur limite pouvant être prédéfinie.

2. Soupape d'aération et d'anti-retour pour un robinet, comportant un corps (11) extérieur métallique, apte à être vissé dans un orifice du robinet, un insert (12) en matière plastique, monté dans le corps (11), et un siège de: soupape (13) qui est associé à l'insert (12), et dans laquelle :
- le corps (11) comporte un logement de réception (17) axial, aligné avec un orifice (19) pour la sortie de l'eau vers un consommateur, ainsi que des fentes (18) radiales à la hauteur du logement de réception (17);
- l'insert (12) est inséré dans le logement de réception (17) axial du corps (11) et comporte une cavité (22), des passages longitudinaux (23) pour le transport de l'eau vers l'orifice de sortie (19) du corps (11) et des orifices radiaux (24), qui s'étendent depuis la cavité (22) jusqu'aux fentes (18) radiales pour l'évacuation de l'eau et/ou de l'air de reflux hors de la soupape;
- le siège de soupape (13) est associé à la cavité (22) et est mobile, en présence d'un reflux d'eau, entre une position d'obturation, qui interrompt la liaison entre les orifices radiaux (24) débouchant dans la cavité (22) et les passages longitudinaux (23) de l'insert (12), et une position d'ouverture, dans laquelle les passages longitudinaux (23) communiquent avec les orifices radiaux (24); et
- le siège de soupape (13) comporte une tige (28; 32) et une tête (26; 30) et la tige (28; 32) est guidée dans la cavité (22), sachant que, dans la position d'obturation, la tête (26; 30) du siège de soupape (13) est en appui étanche sur un bord (22)' de la cavité (22), orienté vers la tête (26; 30),
**caractérisée en ce qu'**il est prévu une concavité (29) dans le fond de la cavité (22), dans laquelle la tige de guidage (25) est reçue pour un guidage axial du siège de soupape (13) et pour un positionnement de la tête (26) sur le bord (22') de la cavité (22), la tige (28; 32) du siège de soupape (13) étant réalisée avec une longueur telle qu'elle vient en appui sur la concavité (29) du fond lorsque le siège de soupape (13) est dans la position d'obturation et est sollicité par une pression qui est supérieure à une valeur limite pouvant être prédéfinie.

3. Soupape d'aération et d'anti-retour selon la revendication 1 ou 2, **caractérisée en ce que** la tête (26; 30) du siège de soupape (13) est munie d'un joint torique (27, 31) destiné à venir en appui sur un bord (22') chanfreiné de la cavité (22) et à le rendre étanche, lorsque ladite tête est dans la position d'obturation.

4. Soupape d'aération et d'anti-retour selon la revendication 1 ou 2, **caractérisée en ce que** la tête (26; 30) du siège de soupape (13) comporte un tronçon (33) d'un seul tenant destiné à venir en appui sur un bord (22') chanfreiné de la cavité (22) et à le rendre étanche, lorsque ladite tête est dans la position d'obturation.

5. Soupape d'aération et d'anti-retour selon l'une quelconque des revendications précédentes, **caractérisée en ce que** l'insert (12) et le corps (11) extérieur sont reliés l'un à l'autre par force et sans joint d'étanchéité intercalé, sachant qu'au moins une partie (12') de la surface périphérique (12'') extérieure de l'insert (12) est conique, la partie conique (12') étant en prise avec une surface conique (17') correspondante du logement de réception (17) du corps (11) extérieur, et l'insert (12) comportant une bride (21) qui est reliée de manière étanche à un bord dans la zone d'entrée du logement de réception (17) du corps (11).
